# EUROPÄISCHE PATENTSCHRIFT

(11) **EP 2 069 103 B1**
(45) Veröffentlichungstag und Bekanntmachung des Hinweises auf die Patenterteilung: **24.11.2010**
(21) Anmeldenummer: 07817670.8
(22) Anmeldetag: 16.10.2007
(51) Int. Cl.: B23Q 3/154, B25B 11/00

(54) **VERFAHREN ZUM EINSPANNEN VERFORMUNGSEMPFINDLICHER WERKSTÜCKE UND SPANNFUTTER ZUR DURCHFÜHRUNG DES VERFAHRENS**
METHOD FOR CHUCKING WORKPIECES SENSITIVE TO DEFORMATION AND CHUCK FOR CARRYING OUT SAID METHOD
PROCÉDÉ DE SERRAGE DE PIÈCES SENSIBLES À LA DÉFORMATION ET MANDRIN DE SERRAGE EN VUE DE L'EXÉCUTION DU PROCÉDÉ

(43) Veröffentlichungstag der Anmeldung: 17.06.2009
(73) Patentinhaber: Röhm GmbH, 89567 Sontheim (DE)
(72) Erfinder: RÖHM, Georg, 89567 Sontheim (DE)
(74) Vertreter: Hentrich, Swen
(86) Internationale Anmeldenummer: PCT/DE2007/001835
(87) Internationale Veröffentlichungsnummer: WO 2009/049569

(56) Entgegenhaltungen:
- DE-C1- 4 200 269
- DE-U1- 29 904 532

## Beschreibung

Die Erfindung ist gebildet durch ein Verfahren zum Einspannen verformungsempfindlicher Werkstücke, insbesondere dünnwandiger Ringe, bei dem das einzuspannende Werkstück zwischen den Spannbacken eines in seinem Futterkörper unterhalb der Spannbacken einen Polblock mit mindestens einem Magneten aufweisenden Spannfutter platziert, durch das Schliessen der Spannbacken zentriert und durch den Magneten in dieser zentrierten Lage fixiert wird. Gegenstand der Erfindung ist weiterhin ein Spannfutter zur Durchführung des Verfahrens.

Aus dem Stand der Technik ist es bekannt und beispielsweise in der DE 299 04 532 U1 beschrieben, verformungsempfindliche Werkstücke für die spanabhebende Bearbeitung mittels einer Vorrichtung zum Aufspannen von Werkstücken zu halten, in der Magnete genutzt werden. Damit sind allerdings die Nachteile verbunden, dass bei Werkstücken mit einer geringen Auflagefläche zu geringe Haltekräfte gegeben sind, wobei diese Probleme prinzipiell durch deren Gestaltung bei dünnwandigen Ringen auftreten, wie diese als Lageringe mit einem Durchmesser im Bereich von ca. 250 bis 5000 mm benötigt werden. Außerdem besteht die Möglichkeit, dass die Werkstücke durch die bei der Bearbeitung auftretenden Kräfte verschoben werden; weiterhin erfolgt durch die Magnete keine zentrische Spannung, so dass vor Aufnahme der Bearbeitung ein großer Zeitaufwand erforderlich ist, um die Werkstücke korrekt auszurichten.

DE 4200269 offenbart eine Werkstückhaltevorrichtung, die auf der Anlagefläche einer Magnetspannplatte festlegbar ist und die aus hochkant auf einer Standfläche aufstehendem, aneinandergereihten Platten aus magnetisierbaren Material und zwischenliegenden, nicht magnetisierbaren Zwischenschichten besteht.

Der Erfindung liegt daher die Aufgabe zugrunde, ein Verfahren anzugeben, mit dem die vorstehend beschriebenen Nachteile vermieden werden. Aufgabe der Erfindung ist es weiterhin, ein Spannfutter bereitzustellen, mit dem das erfindungsgemäße Verfahren ausgeführt werden kann.

Der das Verfahren betreffende Teil der Aufgabe wird durch das eingangs genannte Verfahren gelöst, das die Tatsache ausnutzt, dass ohne weiteren Aufwand durch das Spannfutter ein zentrisches Spannen erreicht wird, so dass vor der Bearbeitungsaufnahme des Werkstückes auf einfache Weise dessen korrekte Ausrichtung sichergestellt ist. Weiterhin ergibt sich durch die Verwendung des Spannfutters auch, dass bei der Bearbeitung auftretende Kräfte das Werkstück nicht verschieben können, da dieses formschlüssig durch die Spannbacken des Spannfutters fixiert ist. Zu beachten bei dem erfindungsgemäßen Verfahren ist, dass das Spannfutter entgegen seiner üblichen gewohnten Bestimmung nicht zwingend zum Spannen des verformungsempfindlichen Werkstückes genutzt wird, dass eine derartige unterstützende Nutzung selbstverständlich aber möglich ist, indem bei dem der Zentrierung dienenden Schliessen der Spannbacken eine Spannkraft erzeugt wird.

Weiterhin bevorzugt im Rahmen der Erfindung ist es, wenn nach dem Schliessen der Spannbacken der als Elektromagnet ausgeführte Magnet eingeschaltet wird, so dass das Zentrieren des Werkstückes durch die Spannbacken ohne störende Interaktion mit einem Permanentmagneten erfolgen kann.

Im Rahmen der Erfindung besteht weiterhin die Möglichkeit, dass in Abhängigkeit der Drehzahl zur zumindest teilweisen Kompensation des fliehkraftinduzierten Spannkraftverlustes der Spannbacken die Feldstärke des Elektromagneten erhöht wird, um so die Lage des Werkstückes verlässlich zu sichern. Selbstverständlich besteht auch die Möglichkeit, dass in Abhängigkeit der Drehzahl zur zumindest teilweisen Kompensation des fliehkraftinduzierten Spannkraftverlustes der Spannbacken die Spannkraft selber erhöht wird.

Anders als bei der Vorrichtung gemäß der DE 299 04 532 U1 ist eine Bearbeitung des Werkstückes in Folge der Verwendung des Spannfutters nur an zwei Seiten möglich, da die dritte Seite durch die Spannbacken blockiert ist. Daher ist im Rahmen der Erfindung vorgesehen, dass nach Bearbeitung der beiden freien Seiten des Werkstücks die Spannbacken von diesem entfernt und dessen Fixierung allein durch den Elektromagneten bewirkt wird, um so die Nachteile zu vermeiden, die sich aus der Präsenz der Spannbacken ergeben.

Um dabei einem Verschieben des Werkstückes entgegenzuwirken ist im Rahmen des erfindungsgemäßen Verfahrens vorgesehen, das nach dem Entfernen der Spannbacken die Feldstärke des Elektromagneten erhöht wird.

Der die Vorrichtung betreffende Teil der Aufgabe wird gelöst durch ein Spannfutter, das manuell oder kraftbetätigt ausgestaltet sein kann und das dadurch gekennzeichnet ist, dass dieses mehrere radial an einem Futterkörper geführte Spannbacken aufweist, und dass im Futterkörper unterhalb der Spannbacken ein Polblock mit mindestens einem Elektromagneten angeordnet ist, und dass zwischen den Spannbacken in Magnetbereichen eine Elektrospulenanordnung des Elektromagneten bzw. Elektrospulenanordnungen mehrerer Elektromagnete angeordnet sind, derart dass benachbarte Magnetbereiche eine unterschiedliche magnetische Polung aufweisen, wobei 6 Spannbacken und 6 Magnetbereiche vorgesehen sind- Die Integration des Polblockes mit einem Elektromagneten innerhalb eines in seinem grundsätzlichen Aufbau aus dem Stand der Technik bekannten Spannfutters bietet die Möglichkeit, dass eben dieser der grundsätzliche Aufbau dieses Spannfutters beibehalten werden kann und insbesondere die Verstellbarkeit der Spannbacken durch den unterhalb angeordneten Polblock nicht beeinträchtigt wird. Durch diese Anordnung lässt sich eine große Feldstärke mit einem geringen konstruktiven Aufwand erzielen. Darüber hinaus ergibt dies einen angemessenen Kompromiss zwischen apparativen Aufwand und in Umfangsrichtung gleichmäßiger Krafteinwirkung auf die verformungsempfindlichen Werkstücke.

Vorteilhaft ist es außerdem, wenn jeder Magnetbereich durch mittiges Teilen Bereiche unterschiedlicher Polung aufweist, da es so auch möglich ist, eine beliebige, auch ungeradzahlige Anzahl von Spannbacken zu verwenden.

Im folgenden wird die Erfindung an einem in der Zeichnung dargestellten Ausführungsbeispiel näher erläutert; es zeigt:

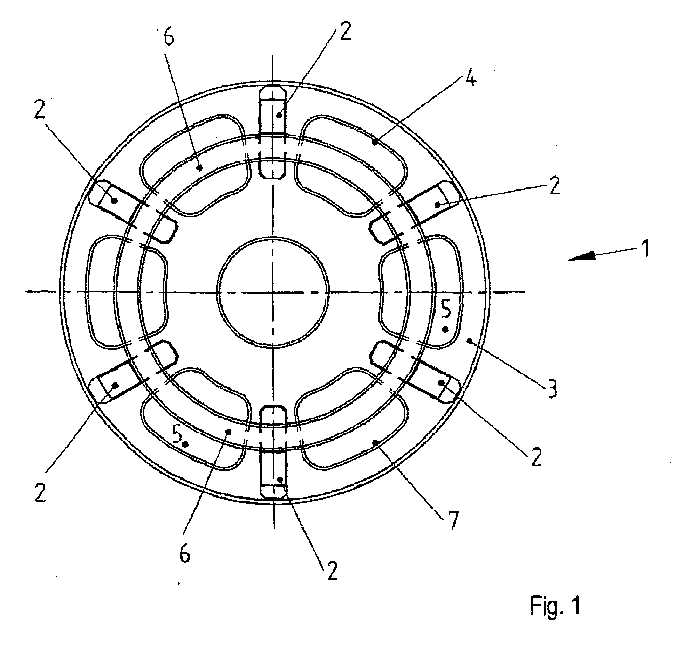

- Fig. 1: eine Vorderansicht eines erfindungsgemäßen Spannfutters in einer schematischen Darstellung mit einem eingespannten Lagerring.

In der Figur 1 ist von einem Spannfutter 1, das zur Realisierung der Erfindung in manueller oder kraftbetätigter Ausführungsform vorliegen kann, die zur Erläuterung der Erfindung ausreichende schematische Vorderansicht dargestellt, da der grundsätzliche Aufbau des Spannfutters 1 zur Betätigung der Spannbacken 2 für die Erfindung unverändert aus dem Stand der Technik übernommen werden kann. Die Figur 1 zeigt einen Futterkörper 3, in dem mehrere, nämlich 6 Spannbacken 2 radial geführt sind, wobei im Futterkörper 3 unterhalb der Spannbacken 2 ein Polblock 7 mit mindestens einem Elektromagneten 4 angeordnet ist, wobei gemäß dem gezeigten Ausführungsbeispiel wiederum 6 Elektromagnete 4 vorhanden sind, die zwischen dem Verstellbereich der Spannbacken 2 platziert sind. Gemäß einen nicht gezeigten Ausführungsbeispiel kann auch jeder Magnetbereich 5 durch mittiges Teilen Bereiche unterschiedlicher Polung aufweisen, wobei benachbarte Bereiche benachbarte Magnetbereiche unverändert ihre unterschiedliche Polung beibehalten. Durch diese Elektromagneten 4 werden Magnetbereiche 5 definiert, wobei benachbarte Magnetbereiche 5 eine unterschiedliche magnetische Polung aufweisen. Mit einem derartigen Spannfutter 1 ist es möglich, verformungsempfindliche Werkstücke 6, insbesondere dünnwandige Ringe wie Lagerringe, zwischen den Spannbacken 2 zu platzieren und dieses Werkstück 6 durch das Schließen der Spannbacken 2 zu zentrieren. Nach der Zentrierung des Werkstückes 6 wird dieses durch die Wirkung des Magneten, insbesondere durch das Einschalten des Elektromagneten 4 gehalten, wobei diese Haltekraft selbstverständlich durch die Spannbacken 2 unterstützt werden kann, die jedoch zur Vermeidung einer Deformation der verformungsempfindlichen Werkstücke 6 nicht die überwiegende Last des Spannens tragen sollten. Bei dem erfindungsgemäßen Spannfutter 1 besteht außerdem die Möglichkeit, dass zur Kompensation des fliehkraftinduzierten Spannkraftverlustes der Spannbacken 2 die Feldstärke des Elektromagneten 4 erhöht und/oder die Spannkraft der Spannbacken 2 selber erhöht wird. Um nach der Bearbeitung der beiden freien Seiten des Werkstückes 6 auch die Seite bearbeiten zu können, die durch das Anliegen der Spannbacken 2 blockiert ist, ist weiterhin vorgesehen, dass diese Spannbacken 2 geöffnet, zurückgezogen oder auf andere Weise von der zu bearbeitenden Seite entfernt und gegebenenfalls die Feldstärke des Elektromagneten 4 erhöht wird, der dann alleinig für die Einspannung des Werkstückes 6 verantwortlich ist.

## Patentansprüche

1. Verfahren zum Einspannen verformungsempfindlicher Werkstücke (6), insbesondere dünnwandiger Ringe, bei dem das einzuspannende Werkstück (6) zwischen den Spannbacken (2) eines in seinem Futterkörper (3) unterhalb der Spannbacken einen Polblock (7) mit mindestens einem Magneten (4) aufweisenden Spannfutters (1) platziert wird, **dadurch gekennzeichnet, dass** durch das Schließen der Spannbacken (2) das Werkstück zentriert und durch den Magneten (4) in dieser zentrierten Lage fixiert wird.

2. Verfahren nach Anspruch 1, **dadurch gekennzeichnet, dass** nach dem Schließen der Spannbacken (2) der als Elektromagnet (4) ausgeführte Magnet eingeschaltet wird.

3. Verfahren nach Anspruch 1 oder 2, **dadurch gekennzeichnet, dass** bei dem der Zentrierung dienenden Schließen der Spannbacken (2) eine Spannkraft erzeugt wird.

4. Verfahren nach Anspruch 3, **dadurch gekennzeichnet, dass** in Abhängigkeit der Drehzahl zur zumindest teilweisen Kompensation des fliehkraftinduzierten Spannkraftverlustes der Spannbacken (2) die Feldstärke des Elektromagneten (4) erhöht wird.

5. Verfahren nach Anspruch 3, **dadurch gekennzeichnet, dass** in Abhängigkeit der Drehzahl zur zumindest teilweisen Kompensation des fliehkraftinduzierten Spannkraftverlustes der Spannbacken (2) die Spannkraft erhöht wird.

6. Verfahren nach einem der Ansprüche 2 bis 5, **dadurch gekennzeichnet, dass** nach Bearbeitung der beiden freien Seiten des Werkstücks (6) die Spannbacken (2) von diesem entfernt z.B. geöffnet, zurückgezogen oder auf andere Weise von der zu bearbeitenden Seite entfernt wurde und dessen Fixierung allein durch den Elektromagneten (4) bewirkt wird.

7. Verfahren nach Anspruch 6, **dadurch gekennzeichnet, dass** nach dem Entfernen der Spannbacken (2) die Feldstärke des Elektromagneten (4) erhöht wird.

8. Spannfutter zur Durchführung des Verfahrens zum Einspannen verformungsempfindlicher Werkstücke (6) nach einem der Ansprüche 1 bis 7, wobei dieses mehrere radial in einem Futterkörper (3) geführte Spannbacken (2) aufweist, die ausgestaltet sind, durch Schließen das Werkstück (6) zu zentrieren, und wobei im Futterkörper (3) unterhalb der Spannbacken (2) ein Polblock (7) mit mindestens einem Elektromagneten (4) angeordnet ist, der ausgestaltet ist, das Werkstück (6) in der zentrierten Lage zu fixieren, und wobei zwischen den Spannbacken (2) in Magnetbereichen (5) eine Elektrospulanordnung des Elektromagneten (4) bzw. Elektrospulenanordnungen mehrerer Elektromagnete (4) derart angeordnet sind, dass benachbarte Magnetbereiche (5) eine unterschiedliche magnetische Polung aufweisen, **dadurch gekennzeichnet, dass** sechs Spannbacken (2) und sechs Magnetbereiche (5) vorgesehen sind.

9. Spannfutter nach Anspruch 8, **dadurch gekennzeichnet, dass** jeder Magnetbereich (5) durch mittiges Teilen Bereiche unterschiedlicher Polung aufweist.

## Claims

1. A method of chucking deformation-sensitive workpieces (6), in particular thin-walled rings, in which the workpiece (6) to be chucked is placed between the jaws (2) of a chuck (1) having a pole block (7) with at least one magnet (4) in its chuck body (3) beneath the jaws, **characterised in that** the workpiece is centred by closure of the jaws (2) and is fixed in said centred position by the magnet (4).

2. A method according to claim 1 **characterised in that** the magnet which is in the form of a solenoid (4) is switched on after closure of the jaws (2).

3. A method according to claim 1 or claim 2 **characterised in that** a clamping force is produced upon closure of the jaws (2), that serves for the centring effect.

4. A method according to claim 3 **characterised in that** the field strength of the solenoid (4) is increased in dependence on the rotary speed for at least partial compensation of the centrifugal force-induced loss of clamping force of the jaws (2).

5. A method according to claim 3 **characterised in that** the clamping force is increased in dependence on the rotary speed for at least partial compensation of the centrifugal force-induced loss of clamping force of the jaws (2).

6. A method according to one of claims 2 to 5 **characterised in that** after machining of the two free sides of the workpiece (6) the jaws (2) are removed therefrom, for example opened, withdrawn or in some other fashion removed from the side to be machined, and fixing thereof is effected solely by the solenoid (4).

7. A method according to claim 6 **characterised in that** the field strength of the solenoid (4) is increased after removal of the jaws (2).

8. A chuck for carrying out the method of chucking deformation-sensitive workpieces (6) according to one of claims 1 to 7 wherein it has a plurality of jaws (2) which are guided radially in a chuck body (3) and which are adapted to centre the workpiece (6) by closure thereof, and wherein arranged in the chuck body (3) beneath the jaws (2) is a pole block (7) with at least one solenoid (4) which is adapted to fix the workpiece (6) in the centred position and wherein an electric coil arrangement of the solenoid (4) or electric coil arrangements of a plurality of solenoids (4) are arranged between the jaws (2) in magnet regions (5) in such a way that adjacent magnet regions (5) are of different magnetic polarity, **characterised in that** there are provided six jaws (2) and six magnet regions (5).

9. A chuck according to claim 8 **characterised in that** each magnet region (5) has regions of differing polarity by virtue of central division.

## Revendications

1. Procédé pour serrer des pièces sensibles à la déformation (6), en particulier des anneaux à parois minces, dans lequel la pièce (6) à serrer est placée entre les mâchoires de serrage (2) d'un mandrin de serrage (1) comportant, dans son corps de mandrin (3), au-dessous des mâchoires de serrage, un bloc polaire (7) avec au moins un aimant (4), **caractérisé en ce que** la pièce est centrée par la fermeture des mâchoires de serrage (2) et est immobilisée dans cette position centrée par l'aimant (4).

2. Procédé selon la revendication 1, **caractérisé en ce qu'**après la fermeture des mâchoires de serrage (2) l'aimant conformé en électroaimant (4) est mis en marche.

3. Procédé selon la revendication 1 ou 2, **caractérisé en ce que**, lors de la fermeture des mâchoires de serrage (2) servant au centrage, une force de serrage est produite.

4. Procédé selon la revendication 3, **caractérisé en ce que**, en fonction de la vitesse de rotation, l'intensité de champ de l'électroaimant (4) est augmentée pour compenser au moins partiellement la perte de force de serrage des mâchoires de serrage (2) induite par la force centrifuge.

5. Procédé selon la revendication 3, **caractérisé en ce que,** en fonction de la vitesse de rotation, la force de serrage est augmentée pour compenser au moins partiellement la perte de force de serrage des mâchoires de serrage (2) induite par la force centrifuge.

6. Dispositif selon une des revendications 2 à 5, **caractérisé en ce que**, après usinage des deux côtés libres de la pièce (6), les mâchoires de serrage (2) sont éloignées de celle-ci, par exemple ouvertes, reculées ou éloignées d'une autre manière du côté à usiner, et l'immobilisation n'est assurée que par l'électroaimant (4).

7. Procédé selon la revendication 6, **caractérisé en ce que**, après éloignement des mâchoires de serrage (2), l'intensité de champ de l'électroaimant (4) est augmentée.

8. Mandrin de serrage pour réaliser le procédé de serrage de pièces sensibles à la déformation (6) selon une des revendications 1 à 7, ledit mandrin comprenant plusieurs mâchoires de serrage (2) guidées radialement dans un corps de mandrin (3) et conçues pour centrer la pièce (6) en se fermant, et, dans le corps de mandrin (3), au-dessous des mâchoires de serrage (2), étant disposée une monture (7) avec au moins un électroaimant (4), lequel est conçu pour immobiliser la pièce (6) en position centrée, et entre les mâchoires de serrage (2) étant disposé, dans des zones magnétiques (5), un agencement de bobine électrique de l'électroaimant (4), respectivement des agencements de bobine électrique de plusieurs électroaimants (4), de façon que des zones magnétiques voisines (5) présentent une polarité différente, **caractérisé en ce qu'**il est prévu six mâchoires de serrage (2) et six zones magnétiques (5).

9. Mandrin de serrage selon la revendication 8, **caractérisé en ce que**, grâce à une division centrale, chaque zone magnétique (5) comporte des zones de polarité différente.
